# EUROPEAN PATENT SPECIFICATION

(11) **EP 1 858 213 B1**
(45) Date of publication and mention of the grant of the patent: **03.11.2010**
(21) Application number: 06791042.2
(22) Date of filing: 19.09.2006
(51) Int. Cl.: H04L 12/56, H04L 29/06

(54) **A METHOD FOR IMPLEMENTING MPLS MESSAGE FORWARDING AND AN EQUIPMENT THEREOF**
VERFAHREN ZUR IMPLEMENTIERUNG EINER MPLS-NACHRICHTEN-WEITERLEITUNG UND VORRICHTUNG DAFÜR
PROCÉDÉ POUR METTRE EN OEUVRE L'ACHEMINEMENT DE MESSAGES MPLS ET ÉQUIPEMENT CORRESPONDANT

(30) Priority: 17.02.2006 CN 200610033763
(43) Date of publication of application: 21.11.2007
(73) Proprietor: Huawei Technologies Co., Ltd., Longgang District, Shenzhen Guangdong 518129 (CN)
(72) Inventor: WU, Jian, Guangdong 518129 (CN); WANG, Yi, Guangdong 518129 (CN); ZHANG, Dapeng, Guangdong 518129 (CN)
(74) Representative: Aufhauser, Christoph
(86) International application number: PCT/CN2006/002450
(87) International publication number: WO 2007/093095

(56) References cited:
- EP-A- 1 583 304
- CN-A- 1 732 652
- US-A1- 2004 184 408
- US-A1- 2004 258 069
- US-A1- 2005 013 297
- US-B1- 6 772 219
- UNKNOWN: "MAC address" HTTP://EN.WIKIPEDIA.ORG, [Online] 22 August 2008 (2008-08-22), XP002493745 Internet Retrieved from the Internet: URL:http://en.wikipedia.org/wiki/MAC_addre ss> [retrieved on 2008-08-28]

## Description

### Field of the Invention

The present invention relates to the technical field of network communications, in particular, to a method and a device for forwarding MPLS (Multi-Protocol Label Switching) packets in an Ethernet switching device.

### Background of the Invention

With the development of Ethernet technologies, the cost of Ethernet switching devices decreases drastically. As a result, Ethernet switching devices are widely used in enterprise networks. Due to the enhancement of the performance, security and manageability of Ethernet, the scale and coverage area of Ethernet increase by leaps and bounds. Ether technology has become one of the most important and prevailing solutions in the access network, the access bearer network and even the backbone network. In the conventional backbone network, MPLS (Multi-Protocol Label Switching) may be employed, and IP/MPLS technologies may also be used as a preferred solution to replace ATM (Asynchronous Transfer Mode) technology. In such a case, MPLS technology is shifted downward to the access network and the access bearer network, borne over layer-2 Ethernet, and provides connection-oriented service channels, so that it's possible to provide an end-to-end systematic solution to users and services.

For a conventional access bearer network constructed with Ethernet switch, in the present solution, Ethernet addresses of all of the users related must be learned, thus the stability and expandability of the network are limited. After MPLS (Multi-Protocol Label Switching) technology is employed, by establishing LSP (Label Switch Path) in the access bearer network, data forwarding between each switching node can be realized with MPLS label switch. The layer-2 MAC address in user's Ethernet data header is packaged in an MPLS label, and the MAC address of a user packet does not need to be learned on a carrier equipment node of the access bearer network. Therefore, it may be avoided to learn a great number of user MAC (Media Access Control) addresses in the carrier network, so that the stability, scalability and security of the network may be improved.

At present, MPLS is widely used in routing switching devices based on layer-3 IP network, for providing users with various services, such as PWE3 (Pseudo Wire Emulation End to End), L2VPN (Layer-2 Virtual Private Network), MPLS traffic engineering and so on. Therefore, the MPLS label has excellent flexibility and expandability, together with the inherent security of LSP switch, it bears more and more services in a packet switching network. When MPLS technology is employed in conjunction with an Ethernet switch hardware platform and the switching network board used in the switch is an Ethernet switch chip, only layer-2 Ethernet packets can be supported in the switching Ethernet, and packets such as ATM, MPLS and so on cannot be supported directly. As a result, when a layer-2 Ethernet switch chip has to be used as an internal switching hardware of a switching device, no further value-added services can be provided in the prior art.

EP 1 583 304 A discloses a method of providing a reconfiguration of a packet switching fabric plane and/or a source board of a media gateway, as well as a media gateway for executing this method. The media gateway comprises a set of packet switching fabric planes, a set of source boards and a set of destination boards. The set of source boards and the set of destination boards are connected via Ethernet trunks through a set of packet switching fabric planes. The media gateway detects failures of a packet switching fabric plane and/or a destination board. If it detects such failure, it determines the Ethernet media access control address of the concerned destination board. Then, it reassigns, depending on the MAC address type, the determined Ethernet medium access address to a spare packet switching fabric plane and/or a spare destination board.

US 6 772 219 B1 discloses a message relay device suitable for constructing an ultra-high-speed message relaying system is disclosed. In the message relay device, a flow is detected by a prescribed condition, while a bypass channel capable of transferring messages with an amount of calculations smaller than the case of handling messages by a default channel is set up, and the message transfer belonging to the flow is switched from the default channel to the bypass channel, while providing the connection-less communications on the default channel, so that it is possible to realize the message relaying with the ultra-high throughput by relieving the large amount of calculations inherently associated with the connection-less communications.

### Summary of the Invention

Therefore, the embodiments of the invention provide a method and a device for forwarding an MPLS packet, so that the MPLS packet can be forwarded in a universal Ethernet switching device.

A method for forwarding an MPLS packet in an Ethernet switching device according to the invention, including:
allocating a private MAC (Media Access Control) address to a port number of an MPLS packet interface board, and
establishing a correlation between the private MAC address and a public MAC address;
obtaining a private MAC address and a port number corresponding to a destination public MAC address of an MPLS packet according to the correlation;
replacing the public MAC address in the MPLS packet with the private MAC address;
forwarding the MPLS packet to the corresponding port according to the private MAC address; and
replacing the private MAC address in the MPLS packet with the destination public MAC, and forwarding the MPLS packet normally.

According to an embodiment the process of establishing a correlation between the private MAC address and the public MAC address comprises:
configuring a mapping table of the port number, the private MAC address and the public MAC address.

According to an embodiment the the private MAC address is a reserved MAC address.

More preferably, before replacing the public MAC address in the MPLS packet with the private MAC address, it is determined whether MPLS label switching is required to be performed on the MPLS packet, if yes, then perform the corresponding MAC address replacement; otherwise, forward the original Ethernet packet normally.

More preferably, after the corresponding MAC address replacement is performed, VLAN information is packaged in the MPLS packet; and
after the private MAC address in the MPLS packet is replaced with the public MAC address, the VLAN information is unpackaged from the MPLS packet.

There is further provided a device for forwarding an MPLS packet in an Ethernet switching device, comprising:
an MPLS packet interface board arranged in an Ethernet switching device, for providing a dedicated interface for MPLS packet forwarding;
a MAC address converting module, for performing conversion between the public MAC address in an MPLS packet that enters the MPLS packet interface board and the private MAC address in an Ethernet switching device;
when an MPLS packet enters the Ethernet switching device via the MPLS packet interface board, the MAC address converting module replaces a public MAC address in the MPLS packet with
a private MAC address, and an Ethernet switch chip forwards the MPLS packet to a corresponding port according to the private MAC address; the MAC address converting module replaces the private MAC address in the MPLS packet with the destination public MAC address, so as to forward it normally.

According to an embodiment the MAC address converting module is embedded in the MPLS packet interface board.

More preferably, the device further comprises:
an MPLS packet switching confirmation module, for confirming whether MPLS label switching is required to be performed on the MPLS packet;
a VLAN packaging module, for packaging VLAN information into an MPLS packet; and
a VLAN unpackaging module, for unpackaging the VLAN information packaged in the MPLS packet.

Preferably, the MPLS packet interface board has at least one service port, and each service port is configured with a MAC address.

Preferably, the MAC address is a private MAC address.

Preferably, the Ethernet switch chip is a layer-2 Ethernet switch chip or a layer-3 Ethernet switch chip.

It can be seen from the above technical solution of the invention that a private MAC address is allocated to a port number of the MPLS packet interface board, and a correlation between the private MAC address and the public MAC address is established; the private MAC address and the port number corresponding to a destination public MAC address of an MPLS packet are obtained; the public MAC address in the MPLS packet is replaced with the private MAC address; and the MPLS packet is forwarded to the corresponding port according to the private MAC address, so that MPLS packet forwarding can be realized on layer-2 and layer-3 Ethernet switch chips. According to the invention, various services based on MPLS, such as PWE3, L2VPN, MPLS traffic engineering and so on, can be supported on layer-2 and layer-3 Ethernet switch chips.

### Brief Description of the Drawings

Fig.1 is a flow chart of a method according to an embodiment of the invention;
Fig.2 is a schematic diagram showing the system structure of an embodiment of the invention;
Fig.3 is a schematic diagram showing the internal structure of an MPLS packet interface board according to an embodiment of the invention;
Fig.4 is a flow chart in which an MPLS packet enters an interface according to an embodiment of the invention; and
Fig.5 is a flow chart in which an MPLS packet exits an interface according to an embodiment of the invention.

### Detailed Description of the Embodiments

The embodiments of the invention provide a device and a method for forwarding an MPLS packet in an Ethernet switching device. In an embodiment of the invention, an MPLS packet interface board is added in an Ethernet switching device, wherein the MPLS packet interface board has at least one service port, and a MAC address is allocated to each service port. The MAC address may be a private MAC address, which has no conflict with the common public MAC addresses for normal forwarding. When an MPLS packet enters the Ethernet switching device, the MPLS packet interface board packages a private MAC address into the packet, and an Ethernet switch chip in the Ethernet switching device forwards the packet to a port corresponding to the destination public MAC address according to the private MAC address, so that MPLS packet forwarding may be realized in the Ethernet switching device. The Ethernet switch chip is a layer-2 Ethernet switch chip or a layer-3 Ethernet switch chip.

To make the objects, the technical solution and the advantages of the invention more apparent, the invention will now be illustrated in detail in conjunction with the drawings and preferred embodiments.

When an MPLS packet needs to be forwarded via an Ethernet switching device, because the internal Ethernet switch chip of the Ethernet switching device only identifies the MAC address, the MPLS packet cannot be forwarded in the Ethernet switching device. As a result, MPLS packet switching cannot be realized by simply adapting the driver of the Ethernet chip.

The structure of an MPLS packet with Ethernet package is as follows:

| |
|---|
| CRC |
| Load |
| Mpls Lable |
| Vlan-Tag |
| (Optional) |
| S-MAC |
| D-MAC |

Therefore, during the implementation of the invention, a private MAC address is to be allocated to each port of an MPLS packet interface board at first, then a MAC address configuration table of the correlation between the private MAC address and the public MAC address is configured, wherein the table is needed for converting the MAC address. For example, a MAC address mapping table can be configured, the table item is:

| MPLS PACKET INTERFACE BOARD IDENTIFICATION | PORT NUMBER | PRIVATE MAC ADDRESS | PUBLIC MAC ADDRESS |
|---|---|---|---|
| 100 | Gel/0/1 | 0001-0002-0003 | 0004-0005-0006 |

Thus, a private MAC address is allocated to each port number of the MPLS packet interface board, and the public MAC address connected with the port is shown in the table item.

MPLS packet forwarding is mainly accomplished via label switching. The MPLS packet obtains the out-label, the corresponding IP address and the public MAC address information needed by searching the in-label mapping table ILM. To realize MPLS packet forwarding in an Ethernet switching device, a MAC address converting module may be added, so that the MAC Address item in the ILM table may be converted between the private MAC address and the public MAC address. Specifically, when an MPLS packet enters the Ethernet switching device for forwarding, the MPLS packet interface board searches the MAC address mapping table according to the destination public MAC address of the packet, so that the port corresponding to the destination public MAC address and the private MAC address corresponding to the port can be obtained. The MAC address converting module converts the public MAC address of the packet into the private MAC address needed. Then, the packet enters the Ethernet switch chip for forwarding. When the packet reaches the destination port, the MAC address converting module queries the MAC address mapping table again, and converts the private MAC address in the ILM table into the public MAC address, so that the MPLS packet can be forwarded in the Ethernet switching device. The specific configuration of the ILM table may be shown as follows:

| |
|---|
| IN-LABEL |
| OUT-LABEL |
| NEXT HOP IP ADDRESS |
| MAC ADDRESS ITEM |
| . |
| . |

Therefore, there is provided a device for forwarding an MPLS packet in an Ethernet switching device in an embodiment of the invention. The device comprises an MPLS packet interface board, which is used to provide a dedicated interface board for realizing MPLS packet forwarding in an Ethernet switching device. The MPLS packet interface board is set in the Ethernet switching device and has at least one service port, and a MAC address is allocated to each service port. The MAC address has no conflict with the common public MAC addresses for normal forwarding; for example, it may employ a private MAC address. The device of the invention further comprises a MAC address converting module, for performing conversion between the public MAC address and the private MAC address in the Ethernet switching device. The MAC address converting module can be embedded in the MPLS packet interface board.

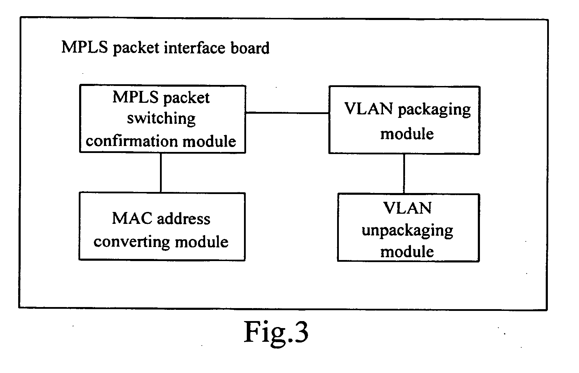

The device for forwarding an MPLS packet according to an embodiment of the invention further comprises a VLAN packaging module and a VLAN unpackaging module, as shown in Fig.3, which may be arranged in the MPLS packet interface board. The VLAN packaging module is used for packaging a VLAN (Virtual LAN) information into an MPLS packet entering the MPLS packet interface board; since a layer-2 switch chip usually performs forwarding based on VLAN and MAC information, the VLAN information needs to be packaged. Correspondingly, when the MPLS packet exits the MPLS packet interface board, a VLAN unpackaging module needs to be provided for unpackaging the VLAN information packaged. Additionally, in a specific embodiment, for some MPLS packets entering the MPLS packet interface board, MPLS packet switching is not required to be performed in the subsequent forwarding process. Therefore, the device for forwarding an MPLS packet according to an embodiment of the invention may further comprise an MPLS packet switching confirmation module, for determining whether MPLS switching is required to be performed on an MPLS packet entering the MPLS packet interface board. If yes, then as described above, the MPLS packet may be forwarded in the Ethernet switching device via the MAC address converting module and the Ethernet switch chip; otherwise, the Ethernet header and MPLS label in the outer-layer may be stripped off from the MPLS packet, so that the original Ethernet packet is sent to the Ethernet switch chip for normal forwarding.

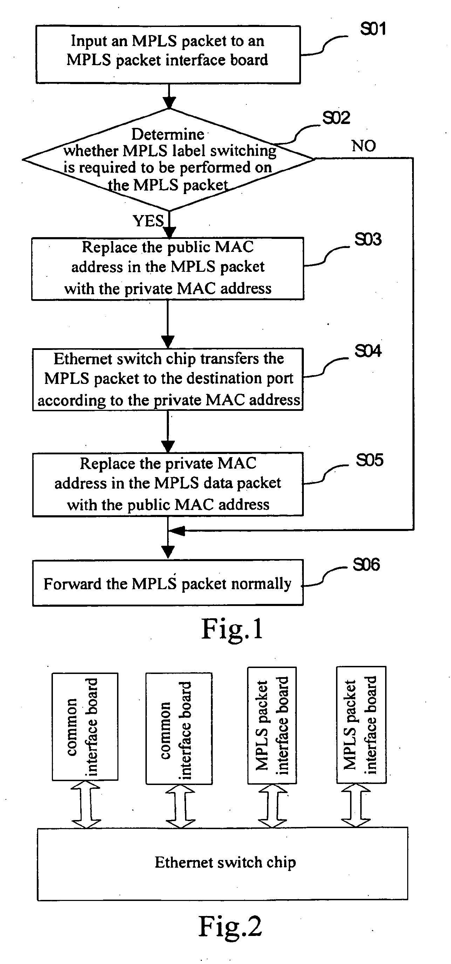

For better understanding of the invention, the implementing process of an embodiment of the invention is hereinafter described in detail, referring to Fig.1, Fig.4 and Fig.5.

Step S01: Input an MPLS packet to an MPLS packet interface board;

In the embodiments of the invention, no special configuration is required to be performed on MPLS packet, because it has been specified in the MPLS Standard Protocol that when the package protocol number in the Ethernet packet header is 8847, it means that this is an MPLS packet, which needs to be sent to an MPLS module for processing. Thus, when an MPLS packet enters an Ethernet switching device, it is required to enter an MPLS packet interface board.

Step S02: it is determined whether MPLS label switching is required to be performed on the MPLS packet, if yes, turn to Step S03; otherwise, turn to Step S06.

In the embodiments of the invention, during the subsequent forwarding process, MPLS label switching is not required to be performed on some MPLS packets entering the MPLS packet interface board. In general, if two or more layers of label stacks are packaged in an MPLS packet, it is determined whether MPLS label switching is required to be performed according to label processing methods such as Push, Pop and Swap, as well as the flag of the label stack bottom. Therefore, there is further provided an MPLS packet switching confirmation module, for determining whether MPLS switching is required to be performed on an MPLS packet entering the MPLS packet interface board.

Step S03: Replace the destination public MAC address of the packet with the private MAC address according to a MAC address mapping table.

Reference may be made to the above description. Additionally, if it is required by Layer-2 Forwarding, VLAN information can be packaged into the packet. For the selection of the private MAC address, the address range reserved in the MAC address, such as 8000 - XXXX - XXXX, can be used. Such private addresses are only used for Ethernet switching in a device, and will not be diffused outside of the device.

Step S04: the Ethernet switch chip transfers the MPLS packet to the port to which the private MAC address is allocated, according to the private MAC address.

Step S05: the MPLS functional module corresponding to the private MAC address replaces the private MAC address in the MPLS data packet received with the destination public MAC address.

If VLAN information is packaged when the packet enters the

MPLS packet interface board, the VLAN is required to be unpackaged at this point, and then the packet is forwarded in normal forwarding process.

Step S06: send the MPLS packet via an outgoing interface.

Now, the processes in which an MPLS packet enters and exits an interface board according to embodiments of the invention will be described.

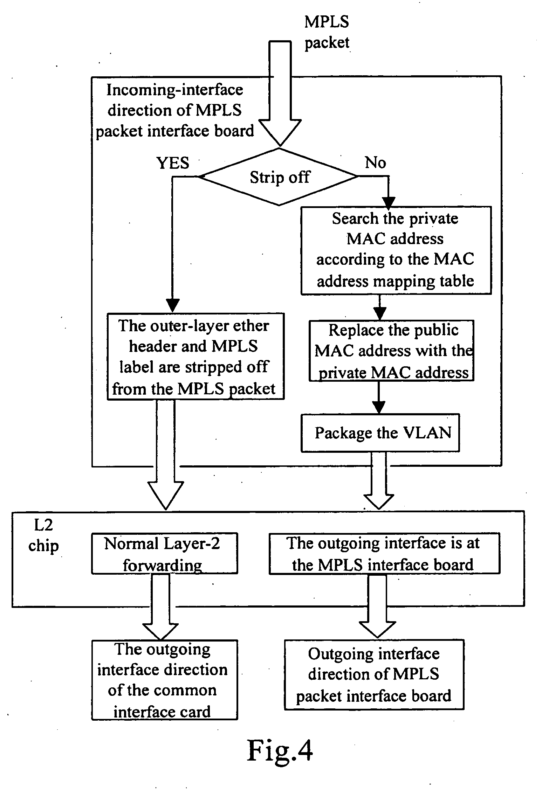

Fig.4 shows a flow chart in which an MPLS packet enters an interface according to an embodiment of the invention, wherein:
If it is determined that MPLS label switching is not required to be performed on the MPLS packet, the outer-layer Ethernet header and MPLS label is stripped off from the MPLS packet, so that the original Ethernet packet can be sent to the Ethernet chip for normal forwarding.
If it is determined that MPLS label switching is required to be performed on the MPLS packet, the private MAC address is searched according to the MAC address mapping table, and the public MAC address in the MPLS packet is replaced with the private MAC address. VLAN is packaged as required. Then, the packet is forwarded to the outgoing interface of the MPLS packet interface board via an Ethernet switch chip (L2 chip).

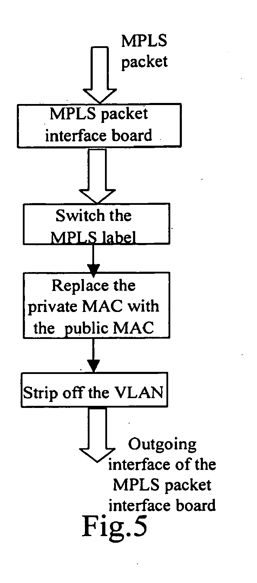

Fig.5 shows a flow chart in which an MPLS packet exits an interface according to an embodiment of the invention, wherein:
MPLS label switching is performed at first, and the private MAC address is replaced with the public MAC address. VLAN is unpackaged as required. Then, the packet is output.

Thus, in the embodiments of the invention, the private MAC address is packaged according to the destination public MAC address of an MPLS packet before the packet enters an Ethernet switch chip. Then, the Ethernet switch chip performs MPLS packet forwarding according to the private MAC address packaged. At this point, the MPLS packaging and the content of the packet in the MPLS package is transparent to the Ethernet switch chip. As a result, various access interfaces and services of PWE3 can be supported via MPLS.

Additional advantages and modifications will readily occur to those skilled in the art. Therefore, the invention in its broader aspects is not limited to the specific details and representative embodiments shown and described herein. Accordingly, various variations and modifications may be made without departing from the scope of the invention as defined by the appended claims and their equivalents.

## Claims

1. A method for forwarding a Multi-Protocol Label Switching packet in an Ethernet switching device, comprising:
allocating a private Media Access Control address to a port number of an Multi-Protocol Label Switching packet interface board, and establishing a correlation between the private Media Access Control address and a public Media Access Control address;
obtaining a private Media Access Control address and a port number corresponding to a destination public Media Access Control address of an Multi-Protocol Label Switching packet according to the correlation;
replacing the public Media Access Control address in the Multi-Protocol Label Switching packet with the private Media Access Control address;
forwarding the Multi-Protocol Label Switching packet to the corresponding port according to the private Media Access Control address; and
replacing the private Media Access Control address in the Multi-Protocol Label Switching packet with the destination public Media Access Control address, and forwarding the Multi-Protocol Label Switching packet normally.

2. The method according to claim 1, wherein the process of establishing a correlation between the private Media Access Control address and a public Media Access Control address comprises:
configuring a mapping table of the port number, the private Media Access Control address and the public Media Access Control address.

3. The method according to claim 1, wherein: the private Media Access Control address is a reserved Media Access Control address.

4. The method according to claim 1, further comprising:
determining whether Multi-Protocol Label Switching label switching is required to be performed on the Multi-Protocol Label Switching packet before replacing the public Media Access Control address in the Multi-Protocol Label Switching packet with the private Media Access Control address, if yes, then performing the corresponding Media Access Control address replacement; otherwise, forwarding the original Ethernet packet normally.

5. The method according to claim 1, wherein: packaging Virtual Local Area Network information in the Multi-Protocol Label Switching packet after the corresponding Media Access Control address replacement is performed; and unpackaging the Virtual Local Area Network information from the Multi-Protocol Label Switching packet after the private Media Access Control address in the Multi-Protocol Label Switching packet is replaced with the public Media Access Control address.

6. A device for forwarding a Multi-Protocol Label Switching packet, comprising:
a Multi-Protocol Label Switching packet interface board, adapted to provide a dedicated interface for Multi-Protocol Label Switching packet forwarding;
a Media Access Control address converting module, adapted to perform conversion between the public Media Access Control address in an Multi-Protocol Label Switching packet that enters the Multi-Protocol Label Switching packet interface board and the private Media Access Control address in an Ethernet switching device;
when an Multi-Protocol Label Switching packet enters the Ethernet switching device via the Multi-Protocol Label Switching packet interface board, the Media Access Control address converting module is adapted to replace a public Media Access Control address in the Multi-Protocol Label Switching packet with a private Media Access Control address; when an Ethernet switch chip forwards the Multi-Protocol Label Switching packet to a corresponding port according to the private Media Access Control address, the Media Access Control address converting module is adapted to replace the private Media Access Control address in the Multi-Protocol Label Switching packet with the destination public Media Access Control address, so as to forward it normally.

7. The device according to claim 6, wherein: the Media Access Control address converting module is embedded in the Multi-Protocol Label Switching packet interface board.

8. The device according to claim 6 or 7, wherein: the device further comprises an Multi-Protocol Label Switching packet switching confirmation module, for confirming whether Multi-Protocol Label Switching label switching is required to be performed on the Multi-Protocol Label Switching packet.

9. The device according to claim 6, wherein the device further comprises:
a Virtual Local Area Network packaging module, for packaging Virtual Local Area Network information into a Multi-Protocol Label Switching packet; and
a Virtual Local Area Network unpackaging module, for unpackaging the Virtual Local Area Network information packaged in the Multi-Protocol Label Switching packet.

10. The device according to claim 6, wherein: the Multi-Protocol Label Switching packet interface board has at least one service port, and each service port is configured with a Media Access Control address.

11. The device according to claim 6, wherein: the Ethernet switch chip is a layer-2 Ethernet switch chip or a layer-3 Ethernet switch chip.

## Patentansprüche

1. Verfahren zum Weiterleiten eines MPLS-Pakets (Multi-Protocol Label Switching) in einer Ethernet-Vermittlungseinrichtung, umfassend:
Zuweisen einer privaten MAC-Adresse (Media Access Control) zu einer Portnummer einer MPLS-Paketschnittstellenplatine und Herstellen einer Korrelation zwischen der privaten MAC-Adresse und einer öffentlichen MAC-Adresse;
Erhalten einer privaten MAC-Adresse und einer Portnummer entsprechend einer öffentlichen MAC-Zieladresse eines MPLS-Pakets gemäß der Korrelation;
Ersetzen der öffentlichen MAC-Adresse in dem MPLS-Paket durch die private MAC-Adresse;
Weiterleiten des MPLS-Pakets an den entsprechenden Port gemäß der privaten MAC-Adresse und
Ersetzen der privaten MAC-Adresse in dem MPLS-Paket durch die öffentliche MAC-Zieladresse und normales Weiterleiten des MPLS-Pakets.

2. Verfahren nach Anspruch 1, wobei der Prozess des Herstellens einer Korrelation zwischen der privaten MAC-Adresse und einer öffentlichen MAC-Adresse Folgendes umfasst:
Konfigurieren einer Abbildungstabelle der Portnummer, der privaten MAC-Adresse und der öffentlichen MAC-Adresse.

3. Verfahren nach Anspruch 1, wobei: die private MAC-Adresse eine reservierte MAC-Adresse ist.

4. Verfahren nach Anspruch 1, weiterhin umfassend:
Bestimmen, ob die MPLS-Labelvermittlung an dem MPLS-Paket durchgeführt werden muss, bevor die öffentliche MAC-Adresse in dem MPLS-Paket durch die private MAC-Adresse ersetzt wird, falls ja, Durchführen der entsprechenden MAC-Adressersetzung; ansonsten normales Weiterleiten des ursprünglichen Ethernet-Pakets.

5. Verfahren nach Anspruch 1, wobei: Packen von VLAN-Informationen (Virtual Local Area Network) in das MPLS-Paket, nachdem die entsprechende MAC-Adressersetzung durchgeführt wird, und Entpacken der VLAN-Informationen aus dem MPLS-Paket, nachdem die private MAC-Adresse in dem MPLS-Paket durch die öffentliche MAC-Adresse ersetzt ist.

6. Einrichtung zum Weiterleiten eines MPLS-Pakets, umfassend:
eine MPLS-Paketschnittstellenplatine, ausgelegt zum Bereitstellen einer eigenen Schnittstelle für die MPLS-Paketweiterleitung;
ein MAC-Adresskonvertierungsmodul, ausgelegt zum Ausführen einer Konvertierung zwischen der öffentlichen MAC-Adresse in einem MPLS-Paket, das in die MPLS-Paketschnittstellenplatine eintritt, und der privaten MAC-Adresse in einer Ethernet-Vermittlungseinrichtung;
wenn ein MPLS-Paket über die MPLS-Paketschnittstellenplatine in die Ethernet-Vermittlungseinrichtung eintritt, ist das MAC-Adresskonvertierungsmodul dafür ausgelegt, eine öffentliche MAC-Adresse in dem MPLS-Paket durch eine private MAC-Adresse zu ersetzen; wenn ein Ethemet-Switchchip das MPLS-Paket an einen entsprechenden Port gemäß der privaten MAC-Adresse weiterleitet, ist das MAC-Adresskonvertierungsmodul dafür ausgelegt, die private MAC-Adresse in dem MPLS-Paket durch die öffentliche MAC-Zieladresse zu ersetzen, um es normal weiterzuleiten.

7. Einrichtung nach Anspruch 6, wobei: das MAC-Adresskonvertierungsmodul in die MPLS-Paketschnittstellenplatine eingebettet ist.

8. Einrichtung nach Anspruch 6 oder 7, wobei: die Einrichtung weiterhin ein MPLS-Paketvermittlungsbestätigungsmodul umfasst, um zu bestätigen, ob die MPLS-Labelvermittlung an dem MPLS-Paket durchgeführt werden muss.

9. Einrichtung nach Anspruch 6, wobei die Einrichtung weiterhin Folgendes umfasst:
ein VLAN-Packungsmodul zum Packen von VLAN-Informationen in ein MPLS-Paket und
ein VLAN-Entpackungsmodul zum Entpacken der in das MPLS-Paket gepackten VLAN-Informationen.

10. Einrichtung nach Anspruch 6, wobei: die MPLS-Paketschnittstellenplatine mindestens einen Serviceport aufweist und jeder Serviceport mit einer MAC-Adresse konfiguriert ist.

11. Einrichtung nach Anspruch 6, wobei: der Ethemet-Switchchip ein Layer-2-Ethernet-Switchchip oder ein Layer-3-Ethernet-Switchchip ist.

## Revendications

1. Procédé d'acheminement d'un paquet à Commutation d'Etiquettes Multi-Protocoles dans un dispositif de commutation Ethernet, comprenant :
l'allocation d'une adresse privée de Commande d'Accès au Support à un numéro de port d'une carte d'interface de paquet à Commutation d'Etiquettes Multi-Protocoles ;
et l'établissement d'une corrélation entre l'adresse privée de Commande d'Accès au Support et une adresse publique de Commande d'Accès au Support ;
l'obtention d'une adresse privée de Commande d'Accès au Support et d'un numéro de port correspondant à une adresse publique destinataire de Commande d'Accès au Support d'un paquet à Commutation d'Etiquettes Multi-Protocoles en fonction de la corrélation ;
le remplacement de l'adresse publique de Commande d'Accès au Support dans le paquet à Commutation d'Etiquettes Multi-Protocoles par l'adresse privée de Commande d'Accès au Support ;
l'acheminement du paquet à Commutation d'Etiquettes Multi-Protocoles au port correspondant en fonction de l'adresse privée de Commande d'Accès au Support ; et
le remplacement de l'adresse privée de Commande d'Accès au Support dans le paquet à Commutation d'Etiquettes Multi-Protocoles par l'adresse publique destinataire de Commande d'Accès au Support, et l'acheminement normal du paquet à Commutation d'Etiquettes Multi-Protocoles.

2. Procédé selon la revendication 1, dans lequel le processus d'établissement d'une corrélation entre l'adresse privée de Commande d'Accès au Support et une adresse publique de Commande d'Accès au Support comprend :
la configuration d'une table de correspondance du numéro de port, de l'adresse privée de Commande d'Accès au Support et de l'adresse publique de Commande d'Accès au Support.

3. Procédé selon la revendication 1, dans lequel l'adresse privée de Commande d'Accès au Support est une adresse de Commande d'Accès au Support réservée.

4. Procédé selon la revendication 1, comprenant en outre :
la détermination si la commutation d'étiquettes de la Commutation d'Etiquettes Multi-Protocoles doit ou non être effectuée sur le paquet à Commutation d'Etiquettes Multi-Protocoles avant de remplacer l'adresse publique de Commande d'Accès au Support dans le paquet à Commutation d'Etiquettes Multi-Protocoles par l'adresse privée de Commande d'Accès au Support, dans l'affirmative, l'exécution alors du remplacement d'adresse de Commande d'Accès au Support correspondant ; dans la négative, l'acheminement normal du paquet Ethernet d'origine.

5. Procédé selon la revendication 1, dans lequel sont effectuées une encapsulation d'informations de Réseau Local Virtuel dans le paquet à Commutation d'Etiquettes Multi-Protocoles après le remplacement de l'adresse de Commande d'Accès au Support correspondant ; et une désencapsulation des informations de Réseau Local Virtuel du paquet à Commutation d'Etiquettes Multi-Protocoles après le remplacement de l'adresse privée de Commande d'Accès au Support par l'adresse publique de Commande d'Accès au Support.

6. Dispositif d'acheminement d'un paquet à Commutation d'Etiquettes Multi-Protocoles, comprenant :
une carte d'interface de paquet à Commutation d'Etiquettes Multi-Protocoles, adaptée pour servir d'interface dédiée à l'acheminement de paquets à Commutation d'Etiquettes Multi-Protocoles ;
un module de conversion d'adresses de Commande d'Accès au Support, adapté pour effectuer une conversion entre l'adresse publique de Commande d'Accès au Support dans un paquet à Commutation d'Etiquettes Multi-Protocoles qui entre dans la carte d'interface de paquets à Commutation d'Etiquettes Multi-Protocole et l'adresse privée de Commande d'Accès au Support dans un dispositif de commutation Ethernet ;
quand un paquet à Commutation d'Etiquettes Multi-Protocoles entre dans le dispositif de commutation Ethernet par l'intermédiaire de la carte d'interface de paquets à Commutation d'Etiquettes Multi-Protocoles, le module de conversion d'adresses de Commande d'Accès au Support est adapté pour remplacer une adresse publique de Commande d'Accès au Support dans le paquet à Commutation d'Etiquettes Multi-Protocoles par une adresse privée de Commande d'Accès au Support ; quand une puce de commutation Ethernet achemine le paquet à Commutation d'Etiquettes Multi-Protocoles jusqu'à un port correspondant en fonction de l'adresse privée de Commande d'Accès au Support, le module de conversion d'adresses de Commande d'Accès au Support est adapté pour remplacer l'adresse privée de Commande d'Accès au Support dans le paquet à Commutation d'Etiquettes Multi-Protocoles par l'adresse publique de Commande d'Accès au Support destinataire de façon à l'acheminer normalement.

7. Dispositif selon la revendication 6, dans lequel : le module de conversion d'adresses de Commande d'Accès au Support est noyé dans la carte d'interface de paquet à Commutation d'Etiquettes Multi-Protocoles.

8. Dispositif selon la revendication 6 ou 7, le dispositif comprenant en outre un module de confirmation de commutation de paquet à Commutation d'Etiquettes Multi-Protocoles, pour confirmer si une commutation d'étiquettes de la Commutation d'Etiquettes Multi-Protocoles doit ou non être effectuée sur le paquet à Commutation d'Etiquettes Multi-Protocoles.

9. Dispositif selon la revendication 6, dans lequel le dispositif comprend en outre :
un module d'encapsulation de Réseau Local Virtuel, pour encapsuler des informations de Réseau Local Virtuel dans un paquet à Commutation d'Etiquettes Multi-Protocoles ; et
un module de désencapsulation de Réseau Local Virtuel, pour désencapsuler les informations de Réseau Local Virtuel encapsulées dans le paquet à Commutation d'Etiquettes Multi-Protocoles.

10. Dispositif selon la revendication 6, dans lequel la carte d'interface de paquet à Commutation d'Etiquettes Multi-Protocoles a au moins un port de service, et chaque port de service est configuré avec une adresse de Commande d'Accès au Support.

11. Dispositif selon la revendication 6, dans lequel : la puce de commutation Ethernet est une puce de commutation Ethernet de couche 2 ou une puce de commutation Ethernet de couche 3.
